# EUROPÄISCHE PATENTSCHRIFT

(11) **EP 1 980 346 B1**
(45) Veröffentlichungstag und Bekanntmachung des Hinweises auf die Patenterteilung: **10.02.2010**
(21) Anmeldenummer: 08005447.1
(22) Anmeldetag: 25.03.2008
(51) Int. Cl.: B22F 3/02, B28D 1/04

(54) **Hohlbohrer**
Core drill
Mèche creuse

(30) Priorität: 13.04.2007 AT 5712007
(43) Veröffentlichungstag der Anmeldung: 15.10.2008
(73) Patentinhaber: Tyrolit Schleifmittelwerke Swarovski KG, 6130 Schwaz (AT)
(72) Erfinder: Neubach, Stefan, 6130 Schwaz (AT); Lochner, Benjamin, 6130 Schwaz (AT); Daxer, Georg, 6130 Schwaz (AT); Fuchs, Gerhard, 6130 Schwaz (AT)
(74) Vertreter: Hofinger, Stephan

(56) Entgegenhaltungen:
- EP-A- 0 857 552
- WO-A-01/56745
- WO-A-2004/022297
- WO-A-2005/061745
- US-A- 4 630 692
- US-A1- 2004 001 741
- US-A1- 2006 165 828

## Beschreibung

Die vorliegende Erfindung betrifft einen Hohlbohrer mit Träger und mit zumindest einem Schneidelement, wobei das Schneidelement auf die Stirnseite des Trägers aufgesetzt oder in den Träger eingesetzt ist und eine zur Vortriebsrichtung des Schneidelementes ragende Schneidkante aufweist. Weiters betrifft die Erfindung ein Verfahren zur Herstellung eines Hohlbohrers.

Hohlbohrer werden beim Stand der Technik häufig mit Schneidelementen aus gesinterten Metallsegmenten mit darin enthaltenen Schleifpartikeln (zB aus Diamant) bestückt. Um den Hohlbohrer beim Ansetzen auf Stein bzw. Beton optimal in Position zu halten, ist es nach Stand der Technik üblich, die Schneidelemente mit in Vortriebsrichtung ragender Schneidkante auszugestalten. Beispielsweise sei hier die EP 0 857 552 A2 angeführt, in der das Schneidelement im Querschnitt die Form eines Dreiecks oder Daches aufweist. In der WO 2004/022297 A1 ist ein Hohlbohrer mit mehreren Schneidelementen offenbart. In den Druckschriften US 4,630,692, US 2004/0001741 A1, WO 2005/061745 A2 und US 2006/0165828 A1 sind Schneidelemente sowie Verfahren zu deren Herstellung offenbart.

Bei den derzeitigen Herstellungsverfahren werden die Schneidelemente hergestellt, indem Schleifpartikel und Bindemittel in einer Pressform aus Graphit gepresst und je nach Bindemittel bei ca. 840° C gesintert werden. Durch die in Vortriebsrichtung des Schneidelementes ragende Schneidkante, beispielsweise in Dachform, kommt es beim Pressstempel an den seitlichen Enden zu erhöhtem Verschleiß, was die Fertigungskosten für Schneidelemente aufgrund der hohen Anschaffungskosten von Pressformen aus Graphit extrem verteuert. Teilweise ist man daher wieder dazu übergegangen, auf Schneidelemente mit Schneidkante zu verzichten und auf "flache" Schneidelemente umzustellen. Ein anderer Ansatz sieht vor, dass man für den Schneidkantenbereich Pressstempel aus Stahl verwendet. Ein Pressstempel aus Stahl hat jedoch den Nachteil, dass die Sintertemperatur unterhalb der thermischen Maximalbelastbarkeit von Stahl liegen muss, was die Auswahlmöglichkeiten aus den verschiedenen Metallbindungen für das Schneidelement reduziert.

Aufgabe der Erfindung ist es daher, einen Hohlbohrer mit Schneidelement der eingangs genannten Gattungen zu schaffen, wobei das Schneidelement einerseits Schneidkanten in Vortriebsrichtung aufweist und andererseits kostengünstig gefertigt werden kann. Weiters soll ein Verfahren zur Herstellung eines Hohlbohrers der vorgenannten Art, bereitgestellt werden, bei dem die Fertigungsnachteile des Standes der Technik verringert sind.

Die gestellten Aufgaben werden einerseits mit einem Hohlbohrer gemäß Anspruch 1, andererseits mit einem Verfahren gemäß Anspruch 10 gelöst.

Bei einem Hohlbohrer mit zumindest einem Schneidelement, wobei das zumindest eine Schneidelement auf den Träger des Hohlbohrers stirnseitig aufgesetzt oder in den Träger eingesetzt ist, wobei zumindest ein Schneidelement eine zur Vortriebsrichtung des Schneidelementes ragenden Schneidkante aufweist, wobei an beiden Seiten der Schneidkante Schleifflächen anschließen, wobei die Schleifflächen jeweils einen ersten Bereich aufweisen, der mit der Vortriebsrichtung Neigungswinkel von über 90° einschließt, wobei an den ersten Bereich an zumindest einer der beiden Schleifflächen ein zweiter Bereich anschließt, der mit der Vortriebsrichtung einen kleineren Neigungswinkel einschließt als der erste Bereich, hat man einerseits den Vorteil, dass der Hohlbohrer beim Ansetzen auf das Schneidgut stets optimal in Position bleibt. Andererseits ist der in radialer Richtung von der Schneidkante entferntere Bereich mit geringerem Neigungswinkel nicht nur produktionstechnisch günstig, da der Pressstempel geringerem Verschleiß an den Enden unterliegt, da die seitlichen Kanten des Pressstempels weniger spitz zulaufen, sondern es kann auch eine Steigerung des Abtrages erzielt werden, da verbesserte Metallbindungen oder optimalere Sintertemperaturen möglich sind.

Das für den Hohlbohrer Gesagte gilt selbstverständlich auch für ein Schneidelement mit einer zur Vortriebsrichtung des Schneidelementes ragenden Schneidkante, wobei an beiden Seiten der Schneidkante Schleifflächen anschließen, wobei die Schleifflächen jeweils einen ersten Bereich aufweisen, der mit der Vortriebsrichtung Neigungswinkel von über 90° einschließt, wobei an den ersten Bereich an zumindest einer der beiden Schleifflächen ein zweiter Bereich anschließt der mit der Vortriebsrichtung einen kleineren Neigungswinkel einschließt als der erste Bereich.

Günstige Ausgestaltungen sehen vor, dass der erste Bereich mit der Vortriebsrichtung Neigungswinkel von 110° bis 160°, vorzugsweise von 120° bis 150° einschließt. Vorteilhaft ist dabei vorgesehen, dass der erste Bereich einen im Wesentlichen konstanten Neigungswinkel aufweist, wobei besonders günstig ist, wenn der erste Bereich mit der Vortriebsrichtung einen Neigungswinkel von ca. 135° einschließt.

In einer vorteilhaften Ausgestaltung kann vorgesehen sein, dass der zweite Bereich mit der Vortriebsrichtung Neigungswinkel von 100° bis 85° einschließt, wobei weiters günstig ist, wenn der zweite Bereich einen im Wesentlichen konstanten Neigungswinkel aufweist. In einer besonders bevorzugten Ausführungsvariante ist vorgesehen, dass der zweite Bereich zur Vortriebsrichtung rechtwinklig angeordnet ist. Weiters ist bevorzugt vorgesehen, dass der zweite Bereich sich über die gesamte Länge des Schneidelementes erstreckt und gegebenenfalls entlang der Länge des Schneidelementes stets denselben Winkel mit der Vortriebsrichtung einschließt.

Bevorzugte Ausführungsformen sehen vor, dass die Schneidkante im Wesentlichen spitz (dreieckförmig) zulaufend ist. Gleichzeitig kann die tatsächliche Schneidkante aber leicht abgerundet bzw. konvex ausgebildet sein. Auch ist es denkbar, dass die Schneidkante einen über die seitlich anschließenden Seitenflächen vorspringenden Bereich mit einer "vorstehenden Schneidkante" gemäß EP 0 857 552 A2 aufweist.

Das Verfahren zur Herstellung eines zuvor genannten Schneidelementes sieht vor, dass Schleifkörner und Bindemittel in eine Pressform eingefüllt werden, wobei anschließend ein Pressstempel gegen die Schleifkörner und Bindemittel enthaltende Pressform presst, sodass Schleifkörner und Bindemittel zu einem Schneidelement gefügt werden, wobei der Pressstempel eine Vertiefung aufweist, der eine Form für die Schneidkante bildet, an den Bereiche unterschiedlicher Neigung für die Schleifflächen anschließen, sodass die Schleifflächen jeweils einen ersten Bereich aufweisen, der mit der Vortriebsrichtung Neigungswinkel von über 90° einschließt, wobei an den ersten Bereich der Schleiffläche ein zweiter Bereich anschließt der mit der Vortriebsrichtung einen kleineren Neigungswinkel einschließt als der erste Bereich.

Günstigerweise ist dabei vorgesehen, dass während des Pressens Pressform und / oder Pressstempel erhitzt werden, wobei besonders bevorzugt vorgesehen ist, dass Schleifkörner und Bindemittel gesintert werden.

In einer besonders bevorzugten Ausführungsform ist vorgesehen, dass die Pressform einen zweiten Pressstempel aufweist, der gegen den ersten Pressstempel bewegt wird. Günstig ist es, wenn nach dem Verpressen von Schleifkörnern und Schleifmittel der erste Pressstempel aus der Pressform herausbewegt wird und der zweite Pressstempel weitergedrückt wird, sodass das gefertigte Schneidelement aus der Pressform geschoben wird.

Weitere Vorteile und Details werden anhand der beiliegenden Figuren und Figurenbeschreibungen erläutert. Es zeigen:
- Fig. 1 - 8: den Ablauf des Herstellungsverfahrens,
- Fig. 9a - 9c: ein erfindungsgemäßes Schneidelement in leicht schräger Seitenansicht (9a), eine Detailansicht der Fig. 9a (9b) und eine Draufsicht (9c) und
- Fig. 10: schematisch einen erfindungsgemäßen Hohlbohrer in Schrägriss.

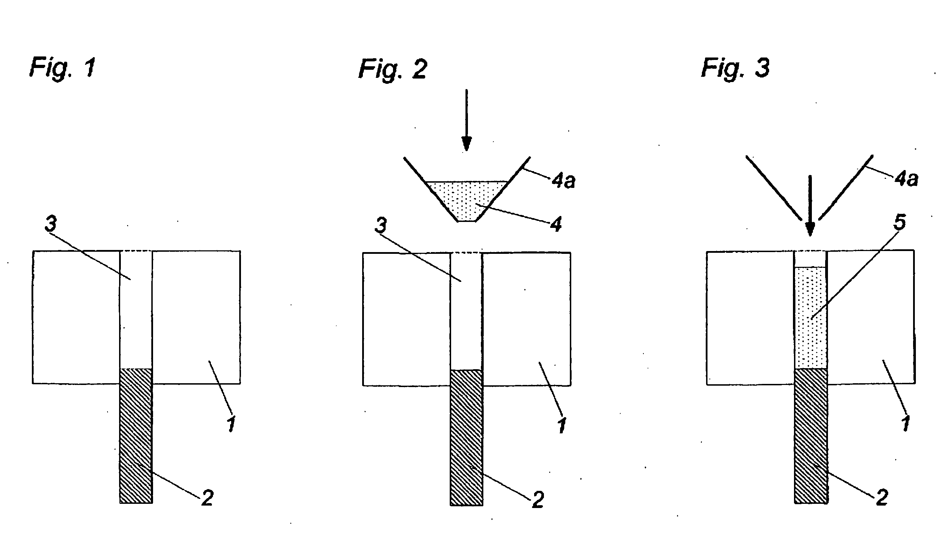

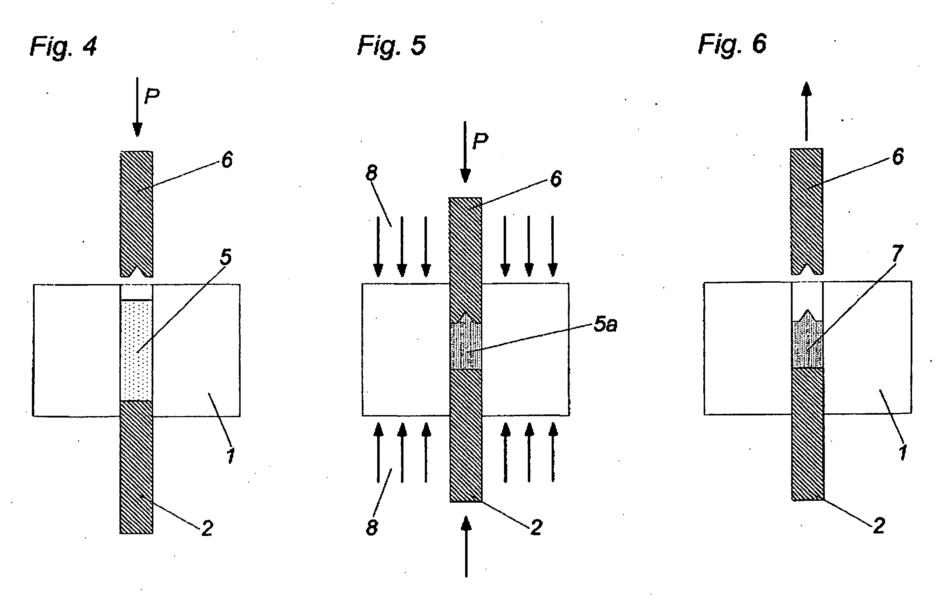

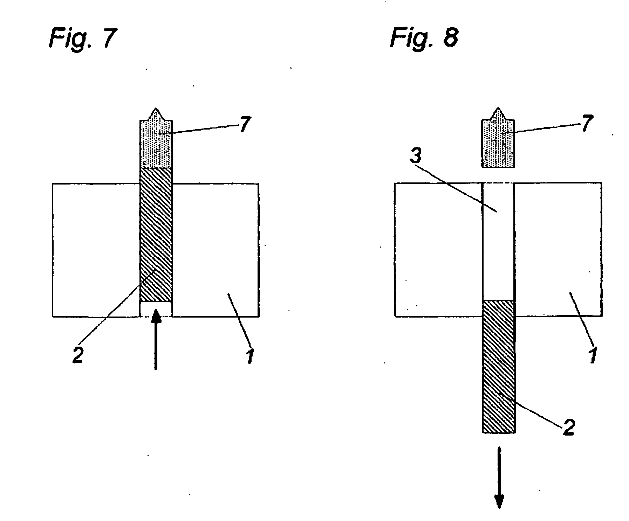

Die Fig. 1 bis 8 zeigen nacheinander die einzelnen Verfahrensschritte jeweils im Querschnitt die Pressform 1 mit einem unteren bewegbaren Pressstempel 2 und dem Füllraum 3, in den Bindemittel und Schleifkörner für die Herstellung des Schneidelementes 7 eingefüllt werden. Pressform 1 und Pressstempel 2 sowie Pressstempel 6 (siehe Fig. 4) sind bevorzugt aus Graphit gefertigt. In der Fig. 2 ist der Einfülltrichter 4a erkennbar, in den eine Mischung 4 aus Bindemittel (Metallpulver) und Schleifkörnern aus Diamanten eingefüllt ist, die in den Füllraum 3 der Pressform 1 eingefüllt wird (siehe Fig. 3). Anschließend wird in die Pressform 1 der obere Pressstempel 6 eingeführt, der eine Vertiefung aufweist und somit eine Form für die Schneidkante des Schneidelementes bildet. An diesen Bereich schließen abgeschrägte Bereiche an, die etwa 45° zur Pressrichtung P geneigt sind. An diese ersten Bereiche schließt ein zweiter, abgeflachter Bereich an, der zur Pressrichtung P im Wesentlichen normal angeordnet ist. Die eingeformte Mischung 5 wird dabei in der Pressform 1 mittels der beiden Pressstempel 2, 6 verpresst. Gleichzeitig mit dem Verpressen wird die Pressform 1 mittels Heizeinrichtungen 8 erwärmt (siehe Fig. 5) und die beiden Pressstempel 2, 6 werden gegeneinander gedrückt, um die gepresste Mischung 5a zu sintern. Nach dem Press- und Sintervorgang wird gemäß Fig. 6 der obere Pressstempel 6 aus der Pressform 1 herausgezogen. Zurück bleibt das fertige Schneidelement 7. Dieses wird anschließend mit dem unteren Pressstempel 2 aus der Pressform 1 gedrückt (siehe Fig. 7). Das entformte Schneidelement 7 kann nunmehr entnommen werden und der weiteren Verarbeitung zugeführt werden, während gemäß Fig. 8 der Pressstempel 2 wieder in die Ausgangsposition geführt wird, sodass wiederum eine Mischung 5 eingeformt werden kann.

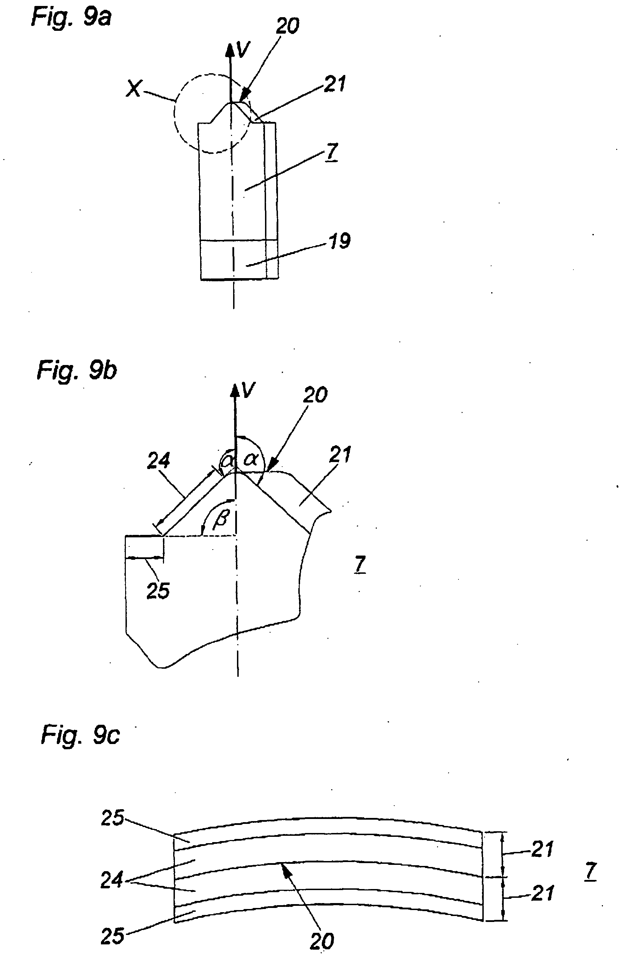

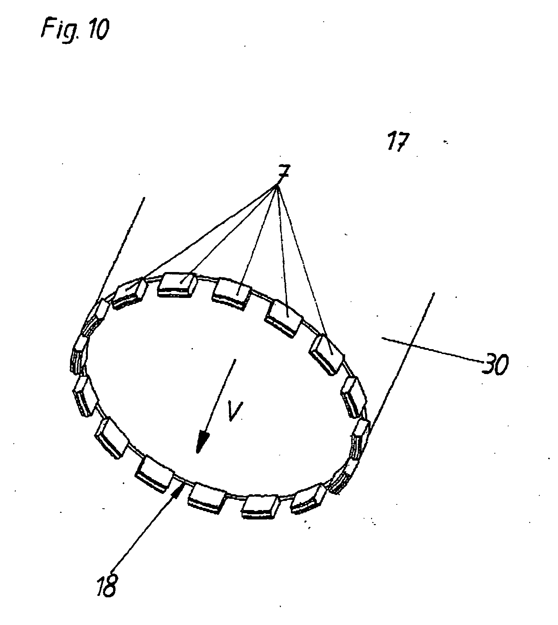

Die Fig. 9a bis 9c zeigen ein Schneidelement 7 mit einer zur Vortriebsrichtung V zeigenden Schneidkante 20. Die Schneidkante 20 ist leicht abgerundet und daher zur Vortriebsrichtung V leicht konvex ausgebildet. An beiden Seiten der Schneidkante 20 schließen Schleifflächen 21 an. Die Schleifflächen 21 weisen einen ersten Bereich 24 auf, der in konstantem Neigungswinkel α zur Vortriebsrichtung V angeordnet ist. Die Vortriebsrichtung V (bzw. der Vektor der Vortriebsrichtung V) schließt mit dem ersten Bereich 24 einen Neigungswinkel α von ca. 135° ein. An den ersten Bereich 24 schließt ein zweiter Bereich 25 der Schleiffläche 21 an. Dieser zweite Bereich 25 weist ebenfalls einen im Wesentlichen konstanten Neigungswinkel β zur Vortriebsrichtung V auf. Im vorliegenden Fall ist dieser zweite Neigungswinkel β ein rechter Winkel, also 90°. Der Übergang zwischen erstem Bereich 24 und zweitem Bereich 25 ist im gezeigten Ausführungsbeispiel sprunghaft mit einer Kante (also unstetig), könnte aber genauso gut abgerundet sein. Da das gezeigte Ausführungsbeispiel ein Schneidelement 7 eines Hohlbohrers 17 ist, weist das Schneidelement 7 in Draufsicht - wie aus Fig. 9c ersichtlich - die Form eines Kreisbogens auf und ist der Form des Bohrkopfes 18 des Hohlbohrers 17 angepasst (siehe auch Fig. 10). Dadurch kann eine genaue Zentrierung des Hohlbohrers 17 am Bohrgut erzielt werden. Der zweite Bereich 25 erstreckt sich über die gesamte Länge 1 des Schneidelementes 7 und schließt entlang dieser Länge 1 des Schneidelementes 7 stets denselben Winkel β von 90° mit der Vortriebsrichtung V ein.

Das gezeigte Ausführungsbeispiel ist außerdem auf ein Zwischenstück 19 aufgebracht, das eine bessere Verbindung zwischen Stirnseite bzw. Trägerkopf 18 und Schneidelement 7 vermitteln soll, da es gute Bindungseigenschaften sowohl zum Trägerkopf 18 als auch zum Schneidelement 7 aufweist. Während das Schneidelement 7 selbst meist verhältnismäßig schwer mit dem Bohrkopf 18 direkt verbindbar (sinterbar) ist. Im gezeigten Ausführungsbeispiel ist das Schneidelement 7 im Querschnitt etwa dachförmig mit seitlichen, horizontal verlaufenden Flanken ausgebildet. Genauso gut könnte das Schneidelement 7 im Querschnitt mit fließenden Übergängen von erstem Bereich 24 zu zweitem Bereich 25 ausgebildet sein und eine im Wesentlichen stetige Kurve beschreiben, beispielsweise die Form einer Gauß-Kurve. Die Übergänge der einzelnen Bereich 24, 25 und der Schneidkante 20 wären dabei ohne scharfe Grenzen ineinander verlaufend.

Die Fig. 10 zeigt schließlich noch den vorderen Teil eines Hohlbohrers 17 im Schrägriss mit mehreren aufgesetzten erfindungsgemäßen Schneidelementen 7. Der Hohlbohrer umfasst einen metallenen rohrförmigen Träger 30, der im Wesentlichen zylinderförmig ausgebildet ist. An der Stirnseite 18 sind die eigentlichen Schneidelemente 7 aufgesetzt. Die Vortriebsrichtung ist mit V gekennzeichnet.

Die Verwendung von Pressformen gänzlich aus Graphit ermöglicht eine Steigerung der Sintertemperatur von 840° C auf über 920° C. Damit können verbesserte Metallbindungen (zB Metallbindungen mit Anteilen von Chrom, Wolfram, Mangan) eingesetzt werden. Diese Metallbindungen zeichnen sich im Einsatz durch höhere Verschleißfähigkeit aus. Zu beachten ist dabei nur, dass das Schleifkorn durch den Sintervorgang nicht zerstört wird (Temperaturgrenze), die für das jeweilige Schleifkorn ermittelt werden muss.

## Patentansprüche

1. Hohlbohrer (17) mit Träger (3) und mit zumindest einem Schneidelement (7), wobei das Schneidelement (7) auf die Stirnseite (18) des Trägers (30) des Hohlbohrers (17) aufgesetzt oder in den Träger (30) eingesetzt ist und eine zur Vortriebsrichtung (V) des Schneidelementes (7) ragende Schneidkante (20) aufweist, **dadurch gekennzeichnet, dass** an beiden Seiten der Schneidkante (20) Schleifflächen (21) anschließen, wobei die Schleifflächen (21) jeweils einen ersten Bereich (24) aufweisen, der mit der Vortriebsrichtung Neigungswinkel (α) von über 90° einschließt, wobei an den ersten Bereich (24) an zumindest einer der beiden Schleifflächen (21) ein zweiter Bereich (25) anschließt, der mit der Vortriebsrichtung (V) einen kleineren Neigungswinkel (β) einschließt als der erste Bereich (24).

2. Hohlbohrer nach Anspruch 1, **dadurch gekennzeichnet, dass** der erste Bereich (24) mit der Vortriebsrichtung (V) Neigungswinkel (α) von 110° bis 160°, vorzugsweise von 120° bis 140° einschließt.

3. Hohlbohrer nach Anspruch 1 oder Anspruch 2, **dadurch gekennzeichnet, dass** der erste Bereich (24) einen im Wesentlichen konstanten Neigungswinkel (α) aufweist.

4. Hohlbohrer nach einem der Ansprüche 1 bis 3, **dadurch gekennzeichnet, dass** der erste Bereich (24) mit der Vortriebsrichtung (V) einen Neigungswinkel (α) von ca. 135° einschließt.

5. Hohlbohrer nach einem der Ansprüche 1 bis 4, **dadurch gekennzeichnet, dass** der zweite Bereich (25) mit der Vortriebsrichtung (V) Neigungswinkel (β) von 100° bis 85° einschließt.

6. Hohlbohrer nach einem der Ansprüche 1 bis 5, **dadurch gekennzeichnet, dass** der zweite Bereich (25) einen im Wesentlichen konstanten Neigungswinkel (β) aufweist.

7. Hohlbohrer nach einem der Ansprüche 1 bis 6, **dadurch gekennzeichnet, dass** der zweite Bereich (25) mit der Vortriebsrichtung (V) einen Neigungswinkel (β) von ca. 90° einschließt.

8. Hohlbohrer nach einem der Ansprüche 1 bis 7, **dadurch gekennzeichnet, dass** die Schneidkante (20) abgerundet ist.

9. Hohlbohrer nach einem der Ansprüche 1 bis 8, **dadurch gekennzeichnet, dass** sich der zweite Bereich (25) über die gesamte Länge (I) des Schneidelementes (7) erstreckt.

10. Verfahren zur Herstellung eines Hohlbohrers mit einem Träger (30) und wenigstens einem Schneidelement (7), welches auf die Stirnseite (18) des Trägers (30) aufgesetzt oder in den Träger (30) eingesetzt wird, wobei das Schneidelement (7) eine zur Vortriebsrichtung (V) des Schneidelementes (7) ragende Schneidkante (20) und an beiden Seiten der Schneidkante (20) anschließende Schleifflächen (21) aufweist, wobei Schleifkörner und Bindemittel in eine Pressform eingefüllt werden, **dadurch gekennzeichnet, dass** anschließend ein Pressstempel (6) gegen die Schleifkörner und Bindemittel (5) enthaltende Pressform (1, 2) presst, sodass Schleifkörner und Bindemittel zu einem Schneidelement (7) gefügt werden, wobei der Pressstempel (6) eine Vertiefung aufweist, der eine Form für die Schneidkante (20) bildet, an die Bereiche unterschiedlicher Neigung für die Schleifflächen (21) anschließen, sodass die Schleifflächen (21) jeweils einen ersten Bereich (24) aufweisen, der mit der Vortriebsrichtung (V) einen Neigungswinkel (α) von über 90° einschließt, wobei an den ersten Bereich (24) der Schleiffläche (21) ein zweiter Bereich (25) anschließt, der mit der Vortriebsrichtung (V) einen kleineren Neigungswinkel (β) einschließt als der erste Bereich (24).

11. Verfahren nach Anspruch 10, **dadurch gekennzeichnet, dass** während des Pressens Pressform (1) und/oder Pressstempel (2, 6) erhitzt werden.

12. Verfahren nach Anspruch 10 oder Anspruch 11, **dadurch gekennzeichnet, dass** Schleifkörner und Bindemittel (5) gesintert werden.

13. Verfahren nach einem der Ansprüche 10 bis 12, **dadurch gekennzeichnet, dass** die Pressform (1) einen zweiten Pressstempel (2) aufweist, der gegen den ersten Pressstempel (6) bewegt wird.

14. Verfahren nach einem der Ansprüche 10 bis 13, **dadurch gekennzeichnet, dass** nach dem Verpressen von Schleifkörnern und Schleifmittel (5) der erste Pressstempel (6) aus der Pressform herausbewegt wird und der zweite Pressstempel (29 weitergedrückt wird, sodass das gefertigte Schneidelement (7) aus der Pressform (1) geschoben wird.

## Claims

1. Hollow drill (17) comprising a support (3) and comprising at least one cutting element (7), the cutting element (7) being placed onto the end face (18) of the support (30) of the hollow drill (17) or inserted into the support (30) and having a cutting edge protruding toward the direction of advancement (V) of the cutting element (7), **characterised in that** grinding surfaces (21) adjoin both sides of the cutting edge (20), the grinding surfaces (21) each having a first region (24) which encloses with the direction of advancement angles of inclination (α) of greater than 90°, there adjoining the first region (24) on at least one of the two grinding surfaces (21) a second region (25) which encloses with the direction of advancement (V) a smaller angle of inclination (β) than the first region (24).

2. Hollow drill according to claim 1, **characterised in that** the first region (24) encloses with the direction of advancement (V) angles of inclination (α) of from 110° to 160°, preferably from 120° to 140°.

3. Hollow drill according to either claim 1 or claim 2, **characterised in that** the first region (24) has a substantially constant angle of inclination (α).

4. Hollow drill according to any one of claims 1 to 3, **characterised in that** the first region (24) encloses with the direction of advancement (V) an angle of inclination (α) of approx. 135°.

5. Hollow drill according to any one of claims 1 to 4, **characterised in that** the second region (25) encloses with the direction of advancement (V) angles of inclination (β) of from 100° to 85°.

6. Hollow drill according to any one of claims 1 to 5, **characterised in that** the second region (25) has a substantially constant angle of inclination (p).

7. Hollow drill according to any one of claims 1 to 6, **characterised in that** the second region (25) encloses with the direction of advancement (V) an angle of inclination (β) of approx. 90°.

8. Hollow drill according to any one of claims 1 to 7, **characterised in that** the cutting edge (20) is rounded.

9. Hollow drill according to any one of claims 1 to 8, **characterised in that** the second region (25) extends over the entire length (I) of the cutting element (7).

10. Method for manufacturing a hollow drill with a support (3) and at least one cutting element (7) which is placed onto the end face (18) of the support (30) or inserted into the support (30), wherein the cutting element (7) comprises a cutting edge (20) protruding toward the direction of advancement (V) of the cutting element (7) and grinding surfaces (21) adjoining both sides of the cutting edge (20), wherein abrasive grains and binder are being introduced into a press mould, **characterised in that** subsequently a press stamp (6) presses against the press mould (1, 2) containing the abrasive grains and binder (5), so that abrasive grains and binder are joined to a cutting element (7), the press stamp (6) having a depression which forms a mould for the cutting edge (20) which is adjoined by regions of differing inclination for the grinding surfaces (21), so that the grinding surfaces (21) each have a first region (24) which encloses with the direction of advancement (V) an angle of inclination (α) of greater than 90°, there adjoining the first region (24) of the grinding surface (21) a second region (25) which encloses with the direction of advancement (V) a smaller angle of inclination (β) than the first region (24).

11. Method according to claim 10, **characterised in that** the press mould (1) and/or press stamp (2, 6) are heated during the pressing.

12. Method according to either claim 10 or claim 11, **characterised in that** abrasive grains and binder (5) are sintered.

13. Method according to any one of claims 10 to 12, **characterised in that** the press mould (1) has a second press stamp (2) which is moved relative to the first press stamp (6).

14. Method according to any one of claims 10 to 13, **characterised in that** after the compression of abrasive grains and abrasive material (5) the first press stamp (6) is moved out of the press mould and the second press stamp (29) is pressed further, so the finished cutting element (7) is slid out of the press mould (1).

## Revendications

1. Mèche creuse (17) avec support (3) et avec au moins un élément de coupe (7), l'élément de coupe (7) étant rapporté sur le côté frontal (18) du support (30) de la mèche creuse (17) ou étant inséré dans le support (30), et présentant une arête de coupe (20) dépassant vers la direction d'avancement (V) de l'élément de coupe (7), **caractérisée en ce que** des surfaces de rectification (21) se raccordent aux deux côtés de l'arête de coupe (20), les surfaces de rectification (21) présentant respectivement une première zone (24) qui forme un angle d'inclinaison (α) de plus de 90° avec la direction d'avancement, une deuxième zone (25) se raccordant à la première zone (24) sur au moins une des deux surfaces de rectification (21), deuxième zone (25) qui forme avec la direction d'avancement (V) un angle d'inclinaison (p) plus faible que la première zone (24).

2. Mèche creuse selon la revendication 1, **caractérisée en ce que** la première zone (24) forme avec la direction d'avancement (V) un angle d'inclinaison (α) de 110° à 160°, de préférence de 120° à 140°.

3. Mèche creuse selon la revendication 1 ou la revendication 2, **caractérisée en ce que** la première zone (24) présente un angle d'inclinaison (α) essentiellement constant.

4. Mèche creuse selon une des revendications 1 à 3, **caractérisée en ce que** la première zone (24) forme avec la direction d'avancement (V) un angle d'inclinaison (α) d'environ 135°.

5. Mèche creuse selon une des revendications 1 à 4, **caractérisée en ce que** la deuxième zone (25) forme avec la direction d'avancement (V) un angle d'inclinaison (β) de 100° à 85°.

6. Mèche creuse selon une des revendications 1 à 5, **caractérisée en ce que** la deuxième zone (25) présente un angle d'inclinaison (p) essentiellement constant.

7. Mèche creuse selon une des revendications 1 à 6, **caractérisée en ce que** la deuxième zone (25) forme avec la direction d'avancement (V) un angle d'inclinaison (β) d'environ 90°.

8. Mèche creuse selon une des revendications 1 à 7, **caractérisée en ce que** l'arête de coupe (20) est arrondie.

9. Mèche creuse selon une des revendications 1 à 8, **caractérisée en ce que** la deuxième zone (25) s'étend sur toute la longueur (I) de l'élément de coupe (7).

10. Procédé de fabrication d'une mèche creuse avec un support (30) et au moins un élément de coupe (7) qui est rapporté sur le côté frontal (18) du support (30) ou qui est inséré dans le support (30), l'élément de coupe (7) présentant une arête de coupe (20) dépassant vers la direction d'avancement (V) de l'élément de coupe (7), et des surfaces de rectification (21) se raccordant aux deux côtés de l'arête de coupe (20), des grains abrasifs et des liants étant introduits dans une matrice , **caractérisé en ce qu'**un piston de presse (6) presse ensuite la matrice (1, 2) contenant les grains abrasifs et les liants (5) de sorte que les grains abrasifs et les liants sont assemblés pour former un élément de coupe (7), le piston de presse (6) présentant un creux qui constitue une forme pour l'arête de coupe (20) à laquelle se raccordent des zones de différentes inclinaisons pour les surfaces de rectification (21) de sorte que les surfaces de rectification (21) présentent respectivement une première zone (24) qui forme avec la direction d'avancement (V) un angle d'inclinaison (α) de plus de 90°, une deuxième zone (25) se raccordant à la première zone (24) de la surface de rectification (21) et formant avec la direction d'avancement (V) un angle d'inclinaison (β) plus petit que la première zone (24).

11. Procédé selon la revendication 10, **caractérisé en ce que**, pendant la compression, la matrice (1) et/ou le piston de presse (2, 6) sont chauffés.

12. Procédé selon la revendication 10 ou la revendication 11, **caractérisé en ce que** les grains abrasifs et les liants (5) sont frittés.

13. Procédé selon l'une des revendications 10 à 12, **caractérisé en ce que** la matrice (1) présente un deuxième piston de presse (2) qui est déplacé contre le premier piston de presse (6).

14. Procédé selon l'une des revendications 10 à 13, **caractérisé en ce que,** après la compression des grains abrasifs et les liants (5), le premier piston de presse (6) est extrait de la matrice, et le deuxième piston de presse (29) continue à être pressé de sorte que l'élément de coupe (7) fabriqué est poussé hors de la matrice (1).
